# EUROPEAN PATENT APPLICATION

(11) **EP 2 979 798 A1**
(43) Date of publication of application: **03.02.2016**
(21) Application number: 15160710.8
(22) Date of filing: 25.03.2015
(51) Int. Cl.: B23C 5/08, B23C 5/10, B23C 5/22, B23B 27/08, B23B 27/04, B23B 29/04, B23B 27/16

(54) **LOCKING STRUCTURE FOR DISPOSABLE BLADES**

(30) Priority: 28.07.2014 TW 103125624
(71) Applicant: Chang, Hsin-Tien, Taichung City (TW)
(72) Inventor: Chang, Hsin-Tien, Taichung City (TW)
(74) Representative: Viering, Jentschura & Partner mbB Patent- und Rechtsanwälte

(57) **Abstract**

A locking structure for disposable blades includes a cutter body (10) and a disposable blade (20). The cutter body (10) has a cutting periphery circumferentially provided with a plurality of blade seats (11) each having a threaded hole (111) tilted at a first angle (θ1). The first angles (θ1) of the threaded holes (111) in the blade seats (11) of the cutter body (10) are defined alternately in opposite directions such that the first angles (θ1) of the threaded holes (111) of each two adjacent blade seats (11) are defined in the opposite directions. The disposable blade (20) is provided on one of the blade seats (11) of the cutter body (10) and is penetrated by a screw hole (21) tilted at a second angle (θ2) equal to the first angle (θ1). The disposable blade (20) is locked to the cutter body (10) by a screw (30).

## Description

### Field of the Invention

The present invention relates to a locking structure for disposable blades. More particularly, the present invention relates to a novel structure for locking disposable blades to a milling cutter, by which the number of blades that can be mounted to a milling cutter is increased in order to enhance cutting efficiency and cut costs.

### Background of the Invention

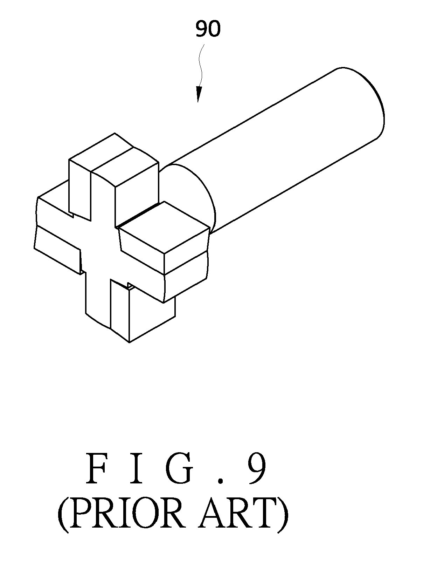

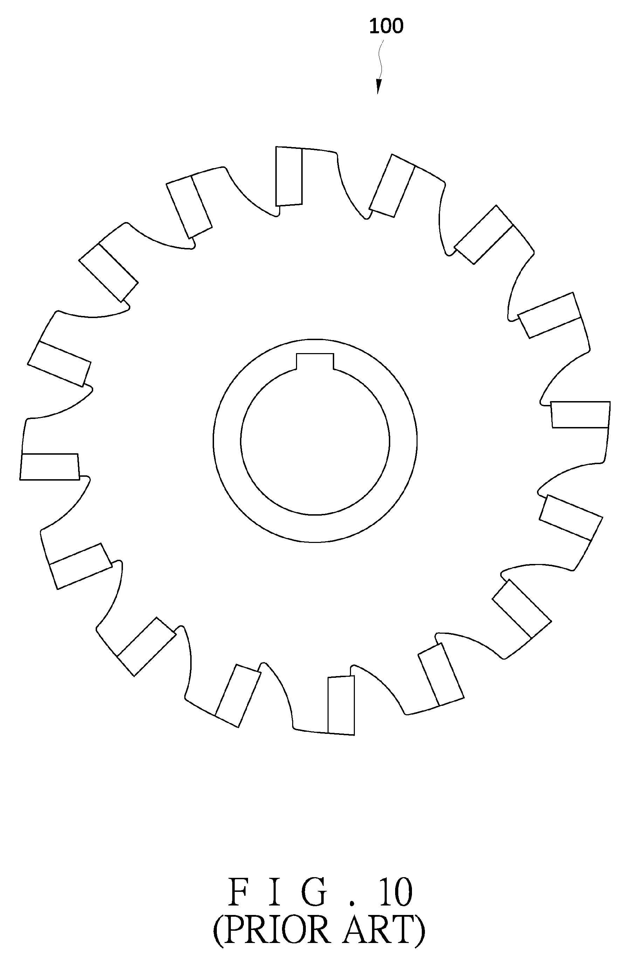

Please refer to FIG. 9 and FIG. 10 respectively for a conventional T-slot cutter 90 and a conventional side milling cutter 100. These cutters 90 and 100 are multi-point cutting tools designed primarily for forming T slots or other types of grooves. A traditional T-slot cutter or side milling cutter typically has soldered blades, which are soldered to the body of the cutter with copper as the soldering material. Such T-slot cutters and side milling cutters feature high chip removal rates due to their multiple cutting edges. Nowadays, the most common blade materials are high-speed steel (HSS) and tungsten carbide (WC). HSS has a hardness of HRC 66∼68 and can withstand temperatures as high as 600°C. However, HSS blades tend to lower both processing speed and feed speed and therefore give way to WC blades when high processing speed is desired. WC cutters are harder and can tolerate higher temperatures than their HSS counterparts, and yet a milling cutter with soldered WC blades cannot be coated in a typical coating environment, whose temperature ranges from 300°C to 800°C, for the copper used to solder the WC blades to the milling cutter will soften at about 300°C to 400°C. This explains why milling cutters with soldered WC blades cannot be coated with titanium, and the lack of this titanium coating hinders further improvement of such milling cutters in hardness, wear resistance, and temperature resistance. Now that cutting speed and feed speed cannot be raised, effective enhancement in processing efficiency is unattainable.

In view of the fact that milling cutters with soldered blades have problem being coated with special metals (e.g., titanium), T-slot cutters and side milling cutters with a disposable structure are called for, whose uses are briefly stated as follows:

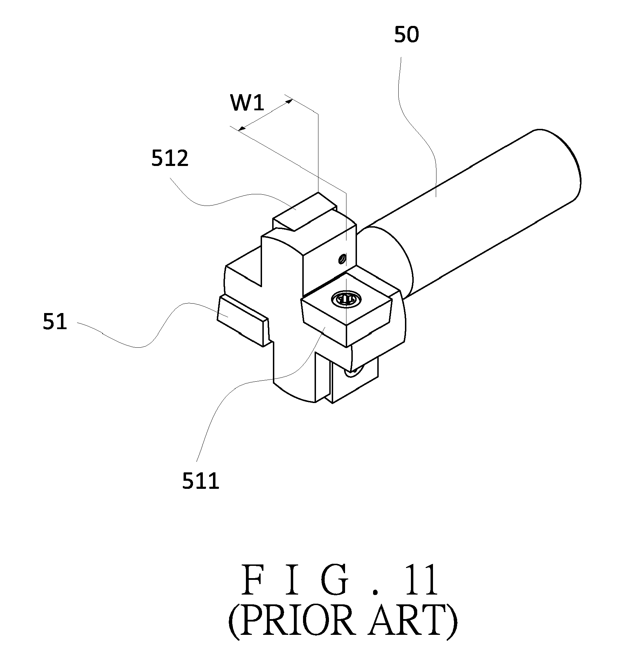

T-slot cutters: Referring to FIG. 11, conventional disposable T-slot cutters 50 have an outer diameter between about 21 mm and 50 mm. The disposable T-slot cutter 50 in FIG. 11 has an outer diameter of 50 mm and four disposable blades 51. As each two adjacent disposable blades (e.g., the disposable blades 511 and 512) are vertically offset with respect to each other to form a complete cutting edge (of a cutting edge width W1), of the disposable T-slot cutter 50. The number of the effective cutting edges of the T-slot cutter is only two, i.e., half of the number of the disposable blades 51. By the same token, if the disposable T-slot cutter 50 has an outer diameter of 21 mm and two disposable blades 51, there will be only one effective cutting edge. Since the feed speed V_{f} of a milling machine is in direct proportion to the number Z_{C} of effective cutting edges (V_{f} = f_{z}*N* Z_{C}, wherein V_{f} is feed speed, f_{z} is feeding amount of each effective cutting edge, N is the number of revolutions of the main shaft per unit time, and Z_{C} is the number of effective cutting edges), the disposable T-slot cutter 50, which, given the same number of blades, has only half as many effective cutting edges as a conventional T-slot cutter with soldered blades, does not provide a significant increase in cutting efficiency as compared with the T-slot cutter with soldered blades. Apart from that, assuming the same cutting conditions (e.g., high speed and heavy-duty cutting), the shaft of a disposable T-slot cutter is more likely to undergo noticeable deflection than the shaft of a T-slot cutter with soldered blades. The deflection not only impairs the precision of cutting but also shortens the service lives of the affected cutters.

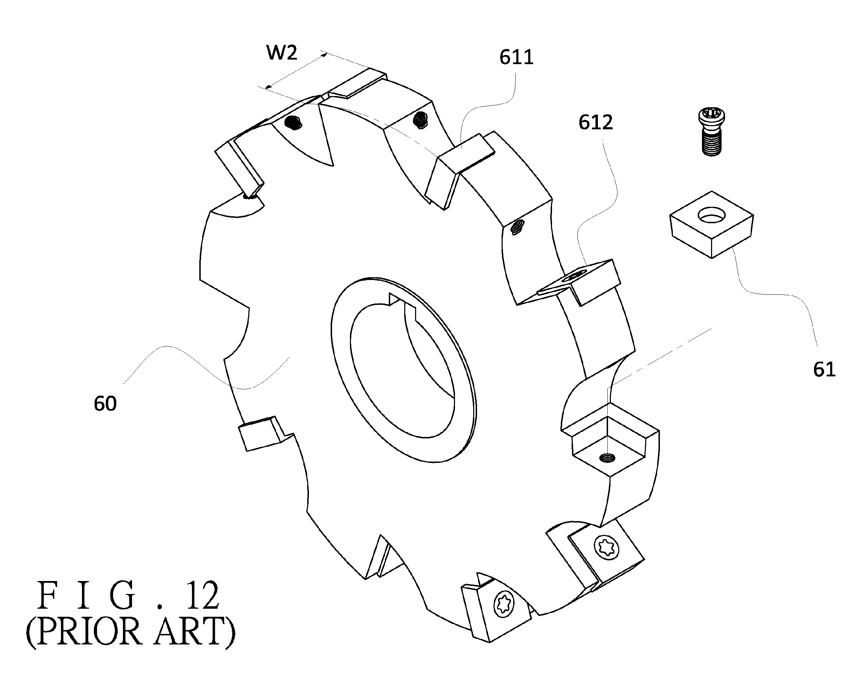

Side milling cutters: Referring to FIG. 12, conventional three-face disposable side milling cutters have an outer diameter between 100 mm and 160 mm. The disposable side milling cutter 60 in FIG. 12 has an outer diameter of 60 mm and ten disposable blades 61, wherein each two adjacent disposable blades (e.g., the disposable blades 611 and 612) are vertically offset with respect to each other to form a complete cutting edge (of a cutting edge width W2) of the side milling cutter. The number of the effective cutting edges of the disposable side milling cutter 60, therefore, is only five, i.e., half of the number of the disposable blades 61. By contrast, a side milling cutter with the same number of soldered blades has ten effective cutting edges. That is to say, the number of the effective cutting edges of a disposable side milling cutter is only half of that of a side milling cutter with the same number of soldered blades. Consequently, disposable side milling cutters do not provide a significant increase in cutting efficiency as compared with side milling cutters with soldered blades.

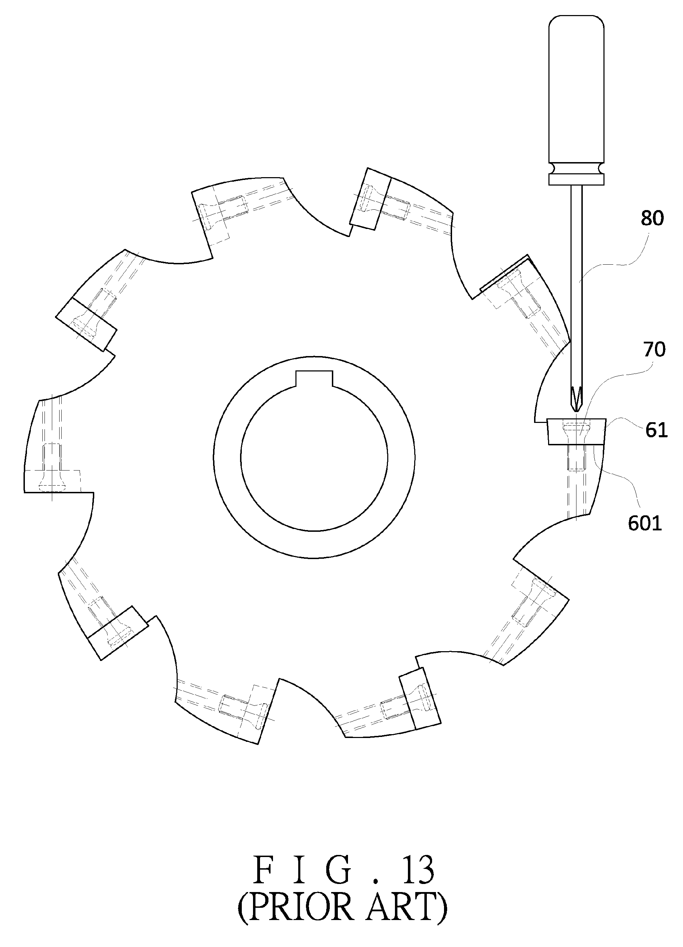

The main reason why the number of the effective cutting edges of a disposable T-slot cutter or disposable side milling cutter cannot be increased lies in the locking structure of the disposable blades 51, 61. More specifically, referring to FIG. 13, each disposable blade 61 is locked to a blade seat 601 by a screw 70 driven in a direction perpendicular to the blade seat 601. Therefore, if the screw 70 is to be fastened with a screwdriver 80, the space required for operating the screwdriver 80 must be taken into account. As a result, spaces which otherwise can constitute the cutter body are sacrificed, and the number of blades that can be mounted to the cutter body is reduced accordingly. It is this conventional blade locking design that keeps the cutting efficiency of disposable T-slot cutters and disposable side milling cutters from betterment.

### Summary of the Invention

As stated above, the blade locking structure of a conventional disposable T-slot cuter or side milling cutter is so designed that, in order to lock a blade to a blade seat with a screw, a screwdriver must be held perpendicular to the blade seat. It follows that there must be room reserved for operation of the screwdriver. In other words, spaces which otherwise can be used to make up the cutter body will be sacrificed. Consequently, the number of blades that can be mounted to the cutter body is reduced, and low cutting efficiency ensues.

To solve the aforesaid problem of the prior art, the present invention provides a locking structure for disposable blades, wherein the locking structure includes a cutter body and a disposable blade. The cutter body has a cutting periphery circumferentially provided with a plurality of blade seats. Each of the blade seats is provided with a threaded hole properly tilted at a first angle. The disposable blade is provided on one of the blade seats of the cutter body and is penetrated by a screw hole. The screw hole is tilted at a second angle equal to the first angle of each threaded hole. The disposable blade is locked to the cutter body by a screw.

The present invention modifies the existing locking structure for disposable blades so that the number of disposable blades that can be mounted to a cutter body, and hence the number of the cutting edges of a milling cutter, is increased in comparison with that which is allowed in the prior art. If the disposable blade also features high hardness, high wear resistance, and high temperature resistance, the resulting milling cutter will be able to overcome cutting resistance effectively and therefore further enhanced in cutting efficiency. In addition, the tilted holes in the locking structure of the present invention prevent interference between adjacent blades. Moreover, as the screw holes of each two adjacent disposable blades are tilted in opposite directions, the four cutting edges of each disposable blade can be used in turn, which brings about maximum economic benefit.

### Brief Description of the Drawings

The structure as well as a preferred mode of use and the advantages of the present invention will be best understood by referring to the following detailed description of an illustrative embodiment in conjunction with the accompanying drawings, in which:
FIG. 1 is a partially exploded perspective view of a milling cutter in one embodiment of the present invention;
FIG. 2 is an assembled plan view of the milling cutter in FIG. 1;
FIG. 3 is a side view of the milling cutter in FIG. 1;
FIG. 4 is a front view of a disposable blade in one embodiment of the present invention;
FIG. 5 is a side view of the disposable blade in FIG. 4;
FIG. 6 is a rear view of the disposable blade in FIG. 4;
FIG. 7 is a cross-sectional view of a blade seat on the cutter body in one embodiment of the present invention;
FIG. 8 is a side view of a side milling cutter in one embodiment of the present invention;
FIG. 9 schematically shows a conventional T-slot cutter with soldered blades;
FIG. 10 schematically shows a conventional side milling cutter with soldered blades;
FIG. 11 schematically shows a conventional disposable T-slot cutter;
FIG. 12 schematically shows a conventional disposable side milling cutter; and
FIG. 13 schematically shows how disposable blades are mounted to or removed from a conventional disposable side milling cutter.

### Detailed Description of the Invention

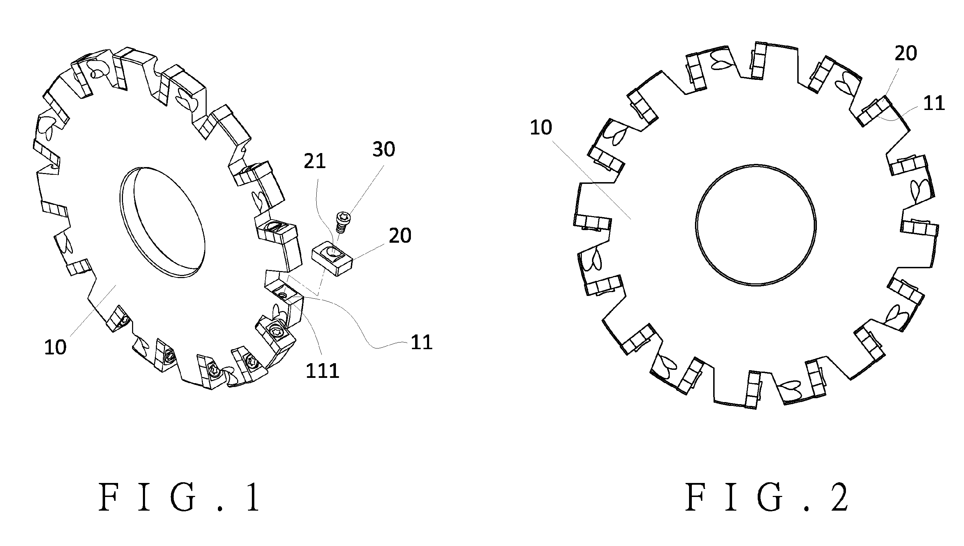

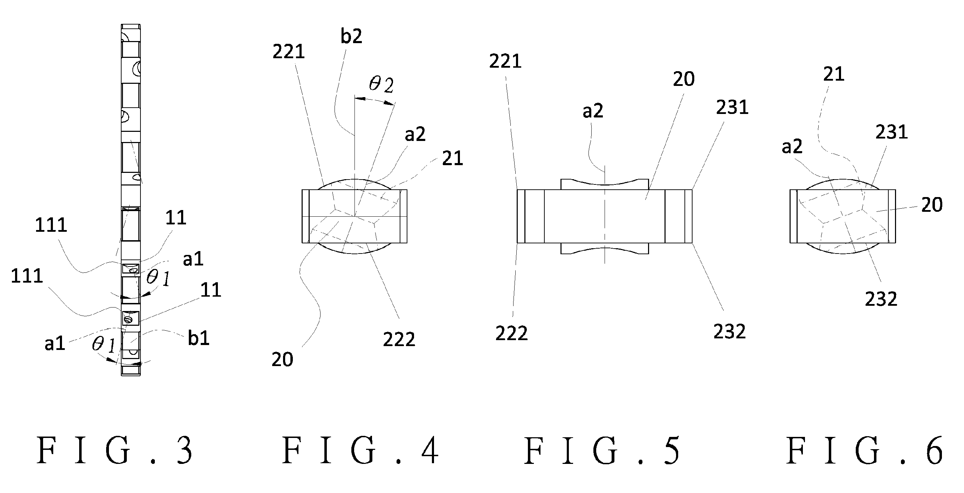

According to the present invention, referring to FIG. 1 and FIG. 2, a locking structure for disposable blades includes a cutter body 10 and a plurality of disposable blades 20. The cutter body 10 has a cutting periphery circumferentially provided with a plurality of blade seats 11. Each blade seat 11 is provided with a threaded hole 111. As shown in FIG. 3, each threaded hole 111 defines a first vertical line a1 passing through the center of circle of the hole's cross section, and each blade seat 11 defines a first vertical center line b1 passing through the center point of the blade seat. Each first vertical line a1 is properly tilted with respect to the corresponding first vertical center line b1 by a first angle θ1.

The disposable blades 20 are provided on the blade seats 11 of the cutter body 10 respectively. Each disposable blade 20 is penetrated by a screw hole 21. As shown in FIG. 4, each screw hole 21 defines a second vertical line a2 passing through the center of circle of the hole's cross section, and each disposable blade 20 defines a second vertical center line b2 passing through the center point of the disposable blade 20. Each second vertical line a2 is properly tilted with respect to the corresponding second vertical center line b2 by a second angle θ2. The second angle θ2 is equal to the first angle θ1. In addition, each screw hole 21 is countersunk at both ends. Each disposable blade 20 is locked to one of the blade seats 11 of the cutter body 10 by a screw 30.

Referring to FIG. 3, the first angles θ1 of the threaded holes 111 of the blade seats 11 provided along the cutting periphery are defined alternately in opposite directions. In other words, the first angles θ1 of the threaded holes 111 of each two adjacent blade seats 11 are defined in the opposite directions (i.e., forming mirror images of each other). This alternate arrangement is intended mainly to enable utilization of all four cutting edges 221, 222, 231, and 232 of each disposable blade 20 (see FIG. 5 in conjunction with FIG. 4 and FIG. 6, wherein FIG. 4∼FIG. 6 are a front view, a side view, and a rear view of a disposable blade 20 respectively). More specifically, the upper and lower cutting edges on the front end side of each disposable blade 20 are defined as the first cutting edge 221 and the second cutting edge 222 respectively, and the upper and lower cutting edges on the rear end side of each disposable blade 20 are defined as the third cutting edge 231 and the fourth cutting edge 232 respectively. When the first cutting edge 221 of a disposable blade 20 is dulled by cutting, this disposable blade 20 can be loosened and turned upside down such that the second cutting edge 222 faces upward. Since the second angle θ2 by which the screw hole 21 of this disposable blade 20 is tilted is defined in the same direction when either the first cutting edge 221 or the second cutting edge 22 faces upward, these two cutting edges on the same end side of the disposable blade 20 can be used by mounting the disposable blade 20 to the same blade seat 11. When both the first and the second cutting edges become dull, the disposable blade 20 must be detached and then mounted to a neighboring blade seat 11 (i.e., where the first angle θ1 of the threaded hole 111 is defined in the opposite direction) in order for the third cutting edge 231 or the fourth cutting edge 232 to be used, as can be understood from the rear view of FIG. 6, which shows the end side where the third cutting edge 231 and the fourth cutting edge 232 are located. Thus, all four cutting edges 221, 222, 231, and 232 of the disposable blade 20 can be used.

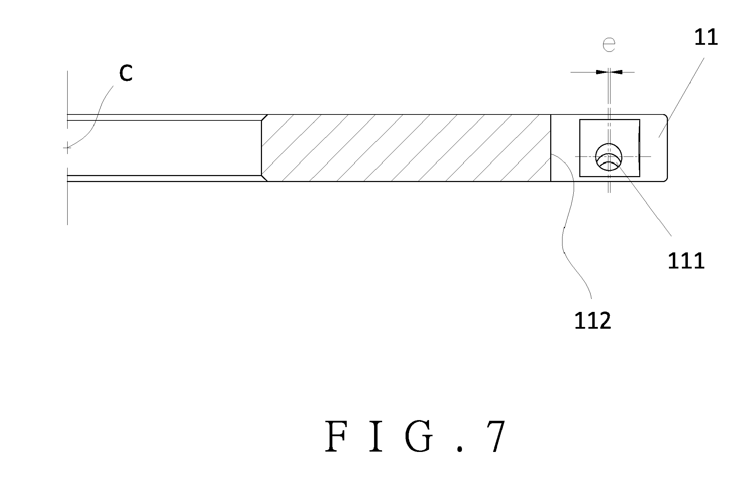

Referring to FIG. 7, the threaded hole 111, which is tilted at the first angle θ1, can be shifted away from a predetermined location of the center of circle of its cross section by a small shift distance e toward a sidewall 112 of the blade seat 11 that is adjacent to the center point C of the cutter body 10. This small shift distance e is approximately 1/20 of the size of the threaded hole 111 (or of the screw 30). For example, if a 5-mm screw 30 is used, the shift distance e is about 0.25 mm. When a disposable blade 20 is locked to such a threaded hole 111 by a screw 30, the screw 30 pushes the disposable blade 20 slightly toward the sidewall 112 of the blade seat 11 due to the existence of the shift distance e. As a result, the disposable blade 20 is pressed tightly against the sidewall 112, secured in position, and firmly locked to the blade seat 11. This allows cutting stress to be transmitted smoothly and thereby enhances stability of the cutter.

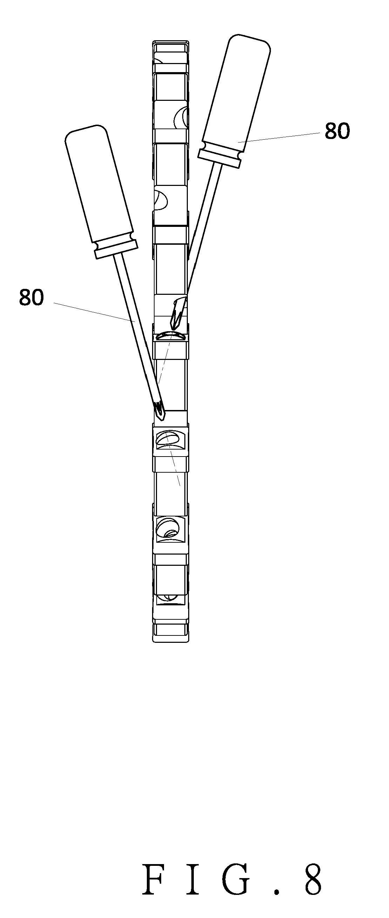

According to the foregoing, the disclosed locking structure for disposable blades is so designed that the threaded hole 111 of each blade seat 11 is properly tilted at the first angle θ1 while the screw hole 21 of each disposable blade 20 is tilted at the second angle θ2, which is equal to the first angle θ1. Thus, referring to FIG. 8, when a tool (e.g., the screwdriver 80) is used to fasten or unfasten the screw 30, the screwdriver 80 must also be tilted at the first angle θ1 or the second angle θ2 and therefore will not be interfered by the adjacent blades. That is to say, the number of blades that can be mounted to the cutter body can be increased so as to provide as many effective cutting edges as a T-slot cutter or side milling cutter with the same number of soldered blades. If, in addition to being increased in number, the disposable blades 20 are coated WC blades for enhanced hardness, wear resistance, and temperature resistance, both cutting speed and feed speed can be raised for higher cutting efficiency.

In summary, the present invention improves the existing locking structure for disposable blades so that the number of disposable blades that can be mounted to a cutter body, and hence the number of the cutting edges of a milling cutter, can be increased. If disposable blades featuring high hardness, high wear resistance, and high temperature resistance are used, the resulting milling cutter can overcome cutting resistance effectively and therefore has higher cutting efficiency than its prior art counterparts. As the locking structure of the present invention incorporates a tilted-hole design, interference between adjacent blades is precluded, and there is no adverse effect on the number of times for which the cutting edges of each disposable blade can be used. In addition, the alternate arrangement of the tilted screw holes of the disclosed disposable blades makes it possible to make use of all four cutting edges of each blade, thus achieving maximum economic benefit. Being the first of its kind in the cutter industry, the locking structure of the present invention is of great novelty and inventiveness.

The embodiment described above is only one of a variety of feasible embodiments of the present invention and is not intended to be restrictive of the scope of patent protection sought by the applicant. All simple equivalent modifications and substitutions based on the appended claims and the content disclosed herein should fall within the scope of the present invention.

## Claims

1. A locking structure for disposable blades, comprising:
a cutter body (10) having a cutting periphery circumferentially provided with a plurality of blade seats (11), wherein each of the blade seats (11) is provided with a threaded hole (111) tilted at a first angle (θ1); and
at least one disposable blade (20) provided on the blade seats (11) of the cutter body (10), wherein the disposable blade (20) is penetrated by a screw hole (21) tilted at a second angle (θ2) equal to the first angle (θ1) of each of the threaded holes (111) and is locked to one of the blade seats (11) of the cutter body (10) by a screw (30).

2. The locking structure of claim 1, wherein the first angles (θ1) of the threaded holes (111) respectively provided in the blade seats (11) of the cutter body (10) are defined alternately in opposite directions such that the first angles (θ1) of the threaded holes (111) of each two adjacent ones of the blade seats (11) are defined in the opposite directions.

3. The locking structure of claim 1, wherein each of the threaded holes (111) tilted at the first angle (θ1) is shifted away from a predetermined location of the center of circle of a cross section of the threaded hole (111) by a small shift distance (e).

4. The locking structure of claim 3, wherein each of the threaded holes (111) is shifted toward a sidewall (112) adjacent to a center point (C) of the cutter body (10).

5. The locking structure of claim 1, wherein each of the threaded holes (111) defines a first vertical line (a1) passing through the center of circle of a cross section of the threaded hole (111), each of the blade seats (11) defines a first vertical center line (b1) passing through a center point of the blade seat (11), and each of the first vertical lines (a1) is tilted with respect to a corresponding one of the first vertical center lines (b1) by the first angle (θ1); and wherein the screw hole (21) defines a second vertical line (a2) passing through the center of circle of a cross section of the screw hole (21), the disposable blade (20) defines a second vertical center line (b2) passing through a center point of the disposable blade (20), and the second vertical line (a2) is tilted with respect to the second vertical center line (b2) by the second angle (θ2).
